# EUROPEAN PATENT SPECIFICATION

(11) **EP 3 116 658 B1**
(45) Date of publication and mention of the grant of the patent: **15.07.2020**
(21) Application number: 14709260.5
(22) Date of filing: 10.03.2014
(51) Int. Cl.: B05B 9/01, F16K 37/00, F16K 5/12, F16K 1/52, B05B 1/30, B05B 12/00, F16K 5/04

(54) **WATER APPLICATION DEVICE WITH ERGONOMIC VOLUME CONTROL**
WASSERAPPLIKATIONSVORRICHTUNG MIT ERGONOMISCHEM VOLUMENREGLER
DISPOSITIF DE DISTRIBUTION D'EAU AVEC RÉGULATION ERGONOMIQUE DU VOLUME

(43) Date of publication of application: 18.01.2017
(73) Proprietor: Husqvarna AB, 561 82 Huskvarna (SE)
(72) Inventor: MÜLLER-BRAUN, Matthias, 89233 Neu-Ulm (DE); FREY, Reiner, 89231 Neu-Ulm (DE); ASAL, Benjamin, 89155 Erbach-Ersingen (DE); HEPPLER, Joachim, 88484 Gutenzell (DE)
(74) Representative: Finkele, Rolf
(86) International application number: PCT/EP2014/054583
(87) International publication number: WO 2015/135566

(56) References cited:
- WO-A2-2005/018814
- WO-A2-2012/126963
- US-B1- 6 568 605
- US-B1- 6 644 625
- US-S1- D 325 620

## Description

### TECHNICAL FIELD

Example embodiments generally relate to watering equipment and, more particularly, relate to a water applicator that employs a volume control lever that is designed for improved ergonomics.

### BACKGROUND

Gardening and yard maintenance, like so many other pursuits, are made easier and more enjoyable when the right tools are available to the gardener for each job. Every garden or yard needs suitable and effective water application. When Mother Nature is not cooperative, or for covered areas, watering equipment may be necessary to provide adequate water supply.

Watering equipment includes such devices as hoses, hose reels, spray guns, spray nozzles, spray lances, water taps (or spigots) and the like. These devices are often used to apply water from the water tap to a garden, plant or other target using the hose along with some form of water application device (e.g., an applicator such as a spray gun, spray nozzle or spray lance). However, gardeners often perceive the need to have different tools for different specific situations. Thus, gardeners desire applicators with different characteristics. WO 2012/126963 A2 shows an exemplary watering device.

One particular characteristic that is often popular with gardeners is the ability to control the volume of water that is permitted to pass through the device. To enable gardeners to control the volume of flow, many devices have enabled the gardeners to attach different applicator heads or rotate a portion of the applicator head to achieve a different flow volume or pattern of application. As such, some applicators are configured to provide specific water application characteristics (e.g., stream, jet, spray, sprinkle, etc.). However, these applicators always require two hands for operation (i.e., one for holding the body of the device, and the other to adjust the applicator head). Thus, operation of the device becomes more cumbersome and less enjoyable for the gardener.

### BRIEF SUMMARY OF SOME EXAMPLES

Some example embodiments may therefore provide a water application device design that places a volume control lever (or flow control lever) in an ergonomically advantageous location, while further enabling the user (i.e., the gardener) to operate the volume control lever with one hand. The ergonomics and function of water application devices can therefore be improved and the operator experience may be more enjoyable.

A water device according to the invention and a method of providing the water device according to the invention are defined in the appended claims.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a block diagram of a water application device in accordance with an example embodiment;
FIG. 2 illustrates an exploded side view of a water application device in accordance with an example embodiment;
FIG. 3A shows a flow control lever prior to insertion into a lever reception slot in accordance with an example embodiment;
FIG. 3B shows the flow control lever after mating between the flow control lever and the lever reception slot in accordance with an example embodiment;
FIG. 4 illustrates an cross section side view of the water application device in accordance with another example embodiment;
FIG. 5 illustrates a close up view of a highlighted portion of FIG. 4 in accordance with an example embodiment;
FIG. 6 illustrates a cross section view taken along line B-B from FIG. 5 in accordance with an example embodiment;
FIG. 7A illustrates rear perspective view of the water application device with the flow control lever to the left in accordance with an example embodiment;
FIG. 7B illustrates rear perspective view of the water application device with the flow control lever to the right in accordance with an example embodiment;
FIG. 8A illustrates an exploded perspective view of the volume control assembly in accordance with an example embodiment;
FIG. 8B illustrates an exploded perspective view of the volume control assembly from an alternative angle in accordance with an example embodiment;
FIG. 9 illustrates a perspective view of an alternative water application device in accordance with an example embodiment;
FIG. 10 illustrates a cover assembly in accordance with an example embodiment; and
FIG. 11 illustrates a method of providing a water application device having a volume control lever operable by an operator using the same hand that holds the device in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

Some example embodiments described herein provide an improved design for a water application device. In this regard, example embodiments may enable an operator or user to control a volume control assembly with the same hand that supports the device. For example, the volume control assembly may be controlled using a volume control lever that is placed at a rear portion of the main body of the device, and on a surface that is substantially parallel to the axis of the handle portion. Moreover, in some cases, the surface may further be parallel or in the same plane as a spine or rear-most portion of the handle so that the user can easily, while holding the main body with one hand, reach the thumb of the same hand to manipulate the volume control lever of the device.

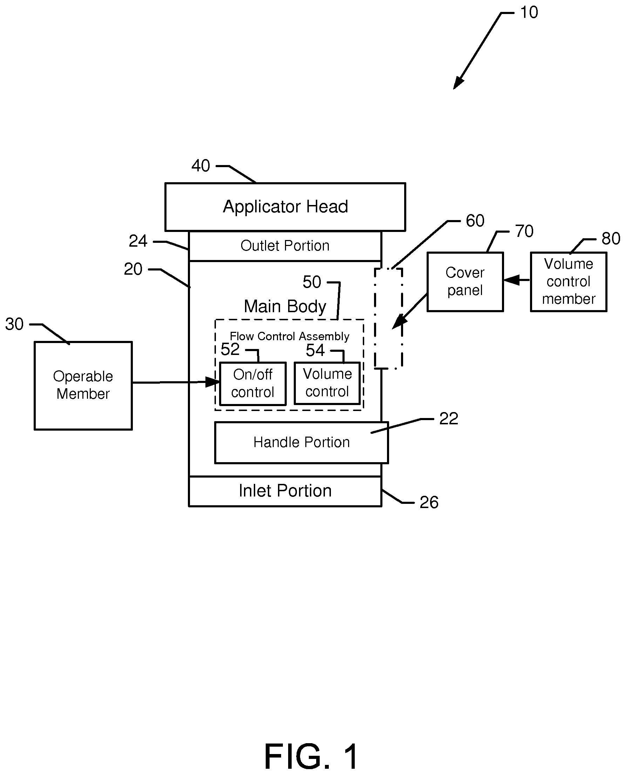

FIG. 1 illustrates a block diagram of a modular water application device 10 in accordance with an example embodiment. The modular water application device 10 may include a main body 20, an operable member 30 and an applicator head 40. The main body 20 may be graspable along a portion thereof by an operator. In some cases, the graspable portion may define a handle portion 22 of the main body 20, and the handle portion 22 may be provided between an outlet portion 24 and an inlet potion 26. The main body 20 may house a flow control assembly 50 configured to enable the device 10 to execute a control function relative to flow of water through the device 10 (e.g., from the inlet portion 26 to the outlet portion 24). In some embodiments, the flow control assembly 50 may include an on/off control assembly 52 and a volume control assembly 54.

The operable member 30 may be attachable to the main body 20 to interface with the flow control assembly 50 to alternately start and stop flow through the device 10 based on a position of the operable member 30. Thus, in some cases, the operable member 30 may act as an operator to open or close (partially or fully) a valve or other flow control device in the flow control assembly 50. In particular, the operable member 30 may interface with the on/off control assembly 52 of the flow control assembly 50. In some cases, the flow control assembly 50 may further enable a volume control function to be performed so that the flow can not only be turned on and off, but also modulated to at least some degree based on operator control. The volume control assembly 54 may be an example of a structure to perform such a function.

The applicator head 40 may be attachable to an outlet portion 24 of the main body 20 to apply water passing through the applicator head 40 based on an application characteristic of the applicator head 40. In some cases, the applicator head 40 may be a selected one of a number of different applicator heads and each of the different applicator heads may have a different structure and/or configuration to support different flow application needs or desires.

In an example embodiment, the main body 20 may include one or more attachment portions 60 in addition to the outlet portion 24. The attachment portion 60 may be a recess or other attachment point configured to receive a cover panel 70. The cover panel 70 may be structured to provide different functional characteristics. In this regard, for example, in some cases, the cover panel 70 may be a cover with the ability to accommodate a volume control member 80. The volume control member 80 may enable the operator to use the volume control member 80 to interact with the flow control assembly 54 to alter the volume of flow through the device 10.

As indicated above, example embodiments may provide an improved ergonomic design that enables the operator to control the volume and handle the device 10 with the same hand (i.e., so that two-handed volume control can be avoided). To facilitate this, a back portion of the main body 20 may be provided with a planar surface that lies in a plane substantially parallel to a longitudinal centerline of a handle portion of the main body 20. Moreover, the planar surface may define at least part of a range of motion of the volume control member 80.

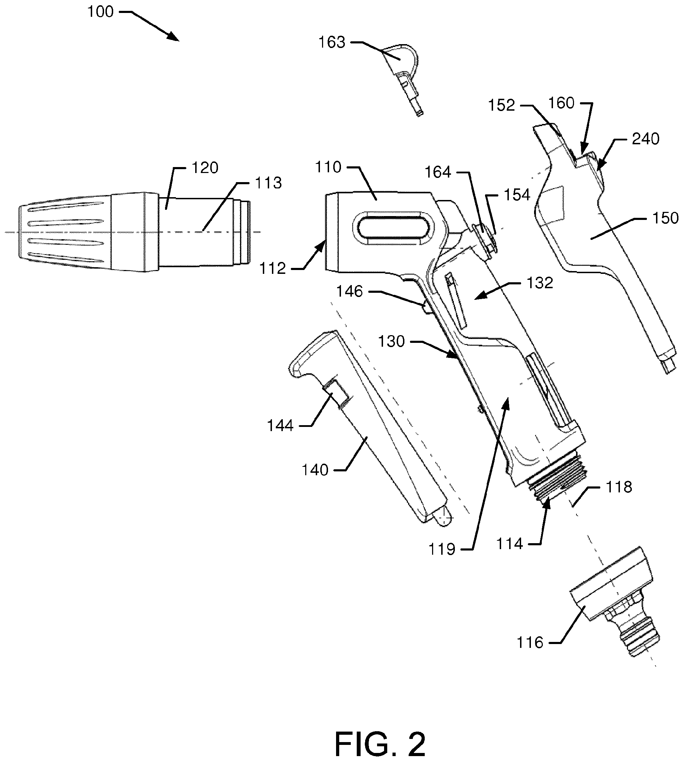

FIG. 2 illustrates an exploded view of a device 100 that forms one example of the device 10 shown in FIG. 1. In this regard, the device 100 includes a main body 110 that is provided as an example of the main body 20 of FIG. 1. Meanwhile, the main body 110 has an outlet portion 112 and inlet portion 114 that serve as examples of the outlet portion 24 and the inlet potion 26, respectively, of FIG. 1. The inlet portion 114 may have a threaded engagement to a quick coupling adaptor 116 that may couple to a hose connector. Meanwhile, the outlet portion 112 may be configured to mate with a selected on of a plurality of different applicators. Applicator 120 is a specific example of the applicator 40 of FIG. 1 and of one of the different applicators that may mate with the outlet portion 112.

The main body 110 may be molded plastic, composite material, metal, or any other suitable material that has sufficient rigidity and can be formed to house chambers, components and/or devices to define a flow channel for water flow from inlet portion 114 to the outlet portion 112. The flow channel may extend along an axis 118 of a handle portion 119 of the main body 110. However, the outlet portion 112 may be formed along an outlet portion axis 113 that forms an angle relative to the axis 118 in some embodiments. Moreover, different main body structures may be selected to define corresponding different angles between the axes 118 and 113.

Attachment portion 132 is an example of the attachment portion 60 of FIG. 1 and cover assembly 150 may be configured to mate with the attachment portion 132. Meanwhile, trigger 140 may form an example of the operable member 30 of FIG. 1. In some cases, the trigger 140 may be pivotally mounted to the main body 110 between the inlet portion 114 and the intersection between the axes 118 and 113. In the example of FIG. 2, the pivot point of the trigger 140 is at an end of the trigger 140 corresponding or proximate to the inlet portion 114. It should be appreciated, however, that the pivot point could alternatively be placed at the other end of the trigger (i.e., such that the pivot point is located proximate to the intersection of the axis 118 and 113. The end of the trigger 140 opposite the pivot point may alternatively be compressed toward the main body 110 and extended away from the main body 110 to adjust the on/off control assembly 52 to turn the device 100 on and off, respectively.

In an example embodiment, the trigger 140 includes a locking member 144 that may be configured to mate with a locking head 146 disposed on the main body 110. However, it should be appreciated that the locking member 144 could alternatively be provided on the main body 110 and the locking head 146 could be provided on the trigger 140. When the trigger 140 is compressed toward the main body 110, the locking member 144 and locking head 146 may engage and disengage each other while the locking member 144 is provided in a locked state (or locking position). Meanwhile, when the locking member 144 is in an unlocked state (or unlock position), the locking member 144 and the locking head 146 may not engage each other regardless of the compression of the trigger 140. When the trigger 140 is compressed from the extended state while the locking member 144 is in the locked state, the trigger 140 may be held proximate to the main body 110 and the on/off control assembly 52 may continuously pass water through the device 100 at a volume determined by the volume control assembly 54. If the trigger 140 is compressed again (i.e., from the compressed state while being held there via engagement of the locking member 144 and locking head 146), then the locking member 144 may be released from the locking head 146 so that the flow control is turned off and flow through the device 100 is stopped.

In an example embodiment, the cover assembly 150 may be attachable to the back attachment portion 132 to alter ergonomic and/or functional characteristics of the handle portion 119 and/or the device as a whole. The cover assembly 150 may be affixed to the attachment portion 132 via a snap fitting, welding, adhesive and/or fixing member. As can be appreciated from FIG. 2, the cover assembly 150 may mate to the main body 110 on an opposite side of the main body 110 relative to a side on which the operable member (e.g., the trigger 140) is provided. Thus, the handle portion 119 includes a back portion (e.g., back attachment portion 132) that is configured to be held toward the operator during water application (assuming the operator sprays away from the operator), and the back portion supports the cover assembly 150.

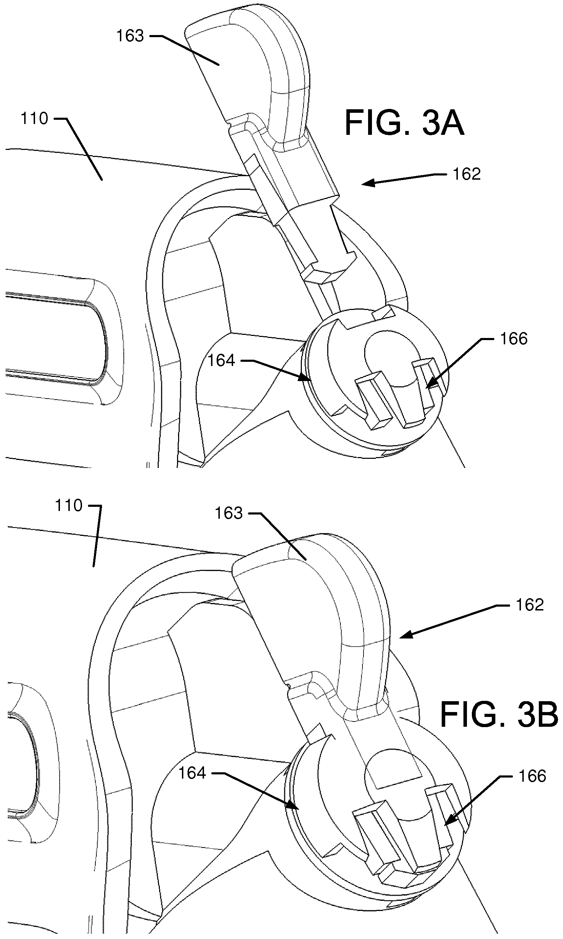

As can be appreciated from FIG. 2, the cover assembly 150 further includes a planar surface 152 provided thereon. The planar surface 152 extends substantially parallel to the axis 118 and, in some cases, further extends substantially perpendicular to a valve stem axis 154. In an example embodiment, the cover assembly 150 may include a receiver 160 provided therein to receive a flow control lever 162. The receiver 160 may be formed by extending an enclosure portion 240 outwardly (e.g., in the direction of the valve stem axis 154) away from the back surface of the cover assembly 150 (which may also lie in the same plane as the planar surface 152). The flow control lever 162 may interface, upon insertion into the receiver 160, with a valve stem 164 that may be operably coupled to the volume control assembly 54. In some cases, the flow control lever 162 may be snap-fit, be screwed into connection with, or otherwise be adhered to the valve stem 164 when inserted into the receiver 160. The valve stem 164 may terminate (in the receiver 160) at a lever reception slot 166 configured to snap fit with the flow control lever 162 as shown in FIG. 3. FIG. 3, which includes FIGS. 3A and 3B, shows the flow control lever 162 prior to insertion into the lever reception slot 166 and after mating between the flow control lever 162 and the lever reception slot 166. Other shapes and sizes may be selected for the flow control lever 162. As such, for example, any selected one of a plurality of different and interchangeable flow control levers may be provided as the flow control lever 162 for mating with the lever reception slot 166.

In an example embodiment, the flow control lever 162 may include a stem portion (e.g., valve stem 164) that may be configured to extend into the volume control assembly 54 and a tab 163 extending along the planar surface 152. In some cases, the tab 163 may be removable from the stem portion 164 (as shown in the example of FIG. 3). In some cases, the valve stem 164 may be housed inside the main body 110 and cover assembly 150 and the tab 163 may be insertable into the enclosure portion formed by the receiver 160 to engage the lever reception slot 166 to complete assembly of the flow control lever 162. It should be appreciated, however, that in some cases, the tab 163 and the stem portion are a unitary piece of molded plastic.

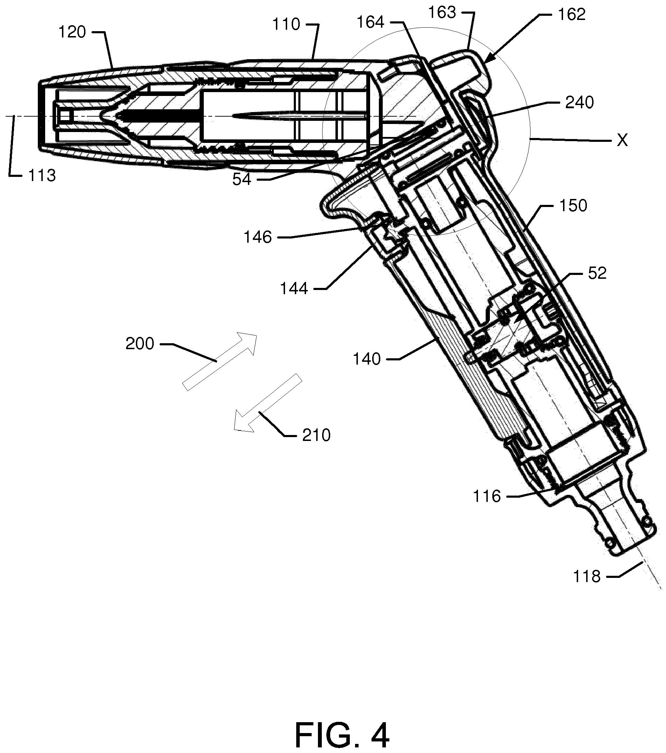

FIG. 4 illustrates a cross section of the device 100 taken along a longitudinal centerline of the device 100. The cross section view of FIG. 4 shows the same components pictured in FIG. 2 in their assembled state. FIG. 4 also shows how water flows through the device 100 via the on/off control assembly 52, which is cycled on when the trigger 140 is compressed in the direction of arrow 200, and which is cycled off when the trigger 140 is extended in the direction of arrow 210. The locking head 146 and locking member 144 are also shown, and it can be appreciated that they are enabled to mate together to lock the trigger 140 in the compressed position when the trigger 140 is compressed while the locking member 144 is in the locked state. When the trigger 140 is compressed, water is generally allowed to flow through the on/off control assembly 52 along the axis 118 and through the volume control assembly 54. The valve stem 164 is operably coupled to the flow control lever 162 so that rotation of the flow control lever 162 causes the valve stem 164 to rotate and operate a throttle valve or other adjustable valve of the volume control assembly 54. The water (at a volume corresponding to the positioning of the valve) may then change directions to align with axis 113 as the water is expelled from the device 100 through the applicator head 120.

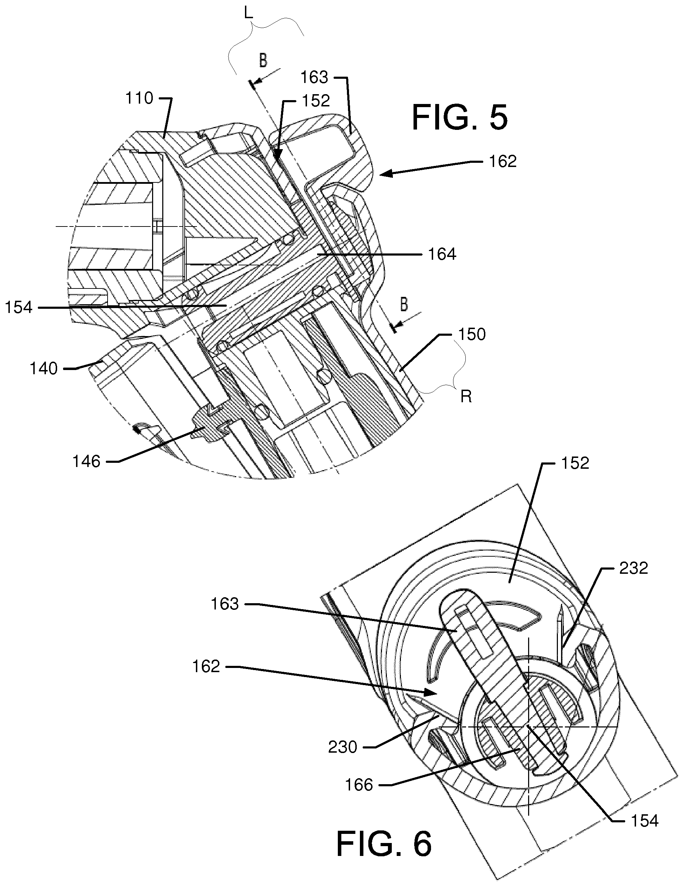

FIG. 4 identifies a circular area labeled X. FIG. 5 is a blown up view of the area X from FIG. 4 to show details of the volume control assembly 54 in greater detail. FIG. 5 shows a line B-B, and FIG. 6 is a cross section view taken along line B-B. Referring to FIGS. 4-6, the planar surface 152 may define at least part of a range of motion of the flow control lever 162 of the volume control assembly 54. As such, for example, the flow control lever 162 may pivot about the valve stem axis 154 to sweep the tab 163 of the flow control lever 162 over the planar surface 152.

As can be appreciated from FIG. 6, the planar surface 152 may be bounded at the extreme limits of motion of the flow control lever 162. In an example embodiment, the boundary limits may be defined by raised portions 230 and 232 formed in the cover assembly 150. The raised portions 230 and 232 may define lateral edges of a slot that forms the receiver 160 in the cover assembly 150. The flow control lever 162 may be enabled to rotate responsive to pressure from the thumb (or another finger) of the operator on either side of the flow control lever 162. The valve stem 164 may have enough friction to hold the flow control lever 162 in position when not being manually adjusted. However, the operator can generally move the flow control lever 162 from side to side between the lateral limits defined by the raised portions 230 and 232.

In some embodiments, the planar surface 152 may define 70 degrees or more of possible rotational movement about the valve stem axis 154 between the raised portions 230 and 232. Moreover, in some cases, the planar surface 152 may not be enclosed around its distal edge relative to the valve stem axis 154 and between the raised portions 230 and 232. As such, the planar surface 152 may be opened over greater than 70 degrees so that the entire top portion of the flow control lever 162 is generally accessible to the operator. Furthermore, in some cases, the tab 163 may be shaped to extend in the direction of the valve stem axis 154 beyond the depth of the receiver 160 (or height of the enclosure portion 240) so that the operator can have the handle portion 119 in the palm of the hand and still reach the thumb of the same hand to operate the flow control lever 162. In FIG. 5, the height of the enclosure portion 240 is generally shown by the distance R. Meanwhile, the length of the tab 163 in the direction of the valve stem axis 154 is shown by length L. L is greater than R.

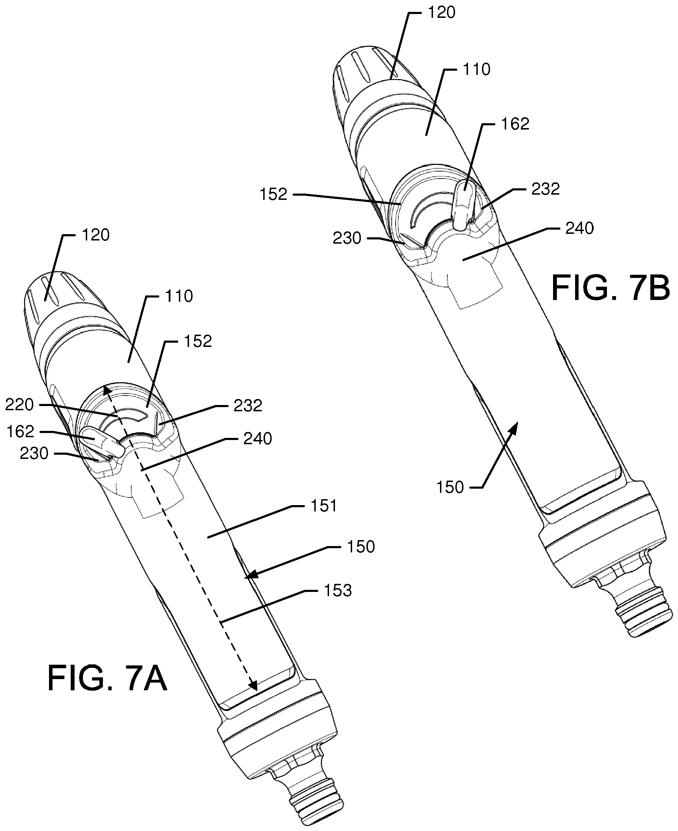

In an example embodiment, rotation of the flow control lever to the left side (as shown in FIG. 7A) may restrict flow, and rotation of the flow control lever to the right side (as shown in FIG. 7B) may increases flow. The planar surface 152 may have an embossed indicator 220 provided thereon to indicate to the user, the flow control options associated with rotation in each direction. FIG. 7 also shows how the cover assembly 150 includes a curved back portion 151, a longitudinal centerline 153 of which extends through the plane of the planar surface 152 with only the enclosure portion 240 separating the curved back portion 151 from the planar surface 152. The longitudinal centerline 153 may define the centerline of the cover assembly 150, the curved back portion 151 and/or the attachment portion 132.

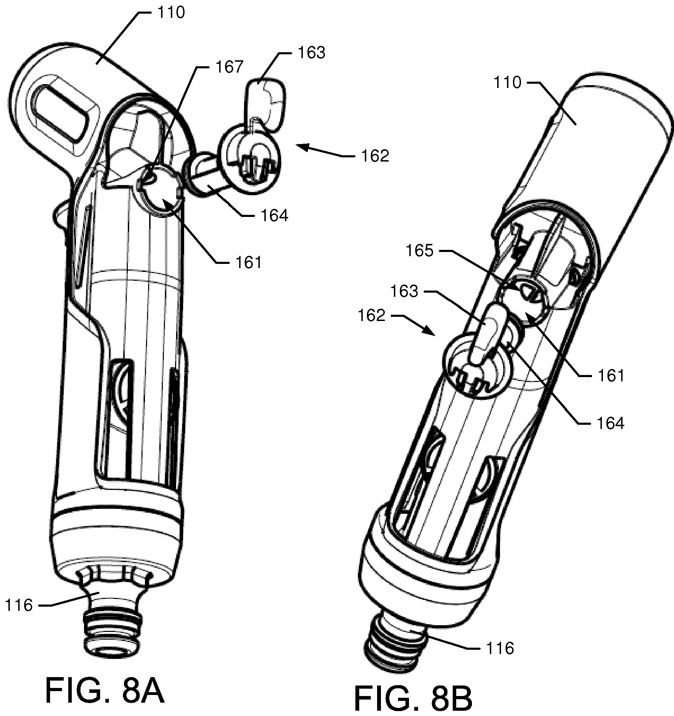

FIG. 8, which includes FIGS. 8A and 8B, illustrates perspective views of the volume control assembly 54 in accordance with an example embodiment. As shown in FIG. 8, the flow control lever 162 may be fit into a chamber 161 having inlet orifices 165 and outlet orifices 167. Based on rotation of the valve stem 164 responsive to thumb pressure on the tab 163, the valve stem 164 exposes different amounts of surface area of the inlet orifices 165 to enable the volume of flow into the chamber 161 to be controlled.

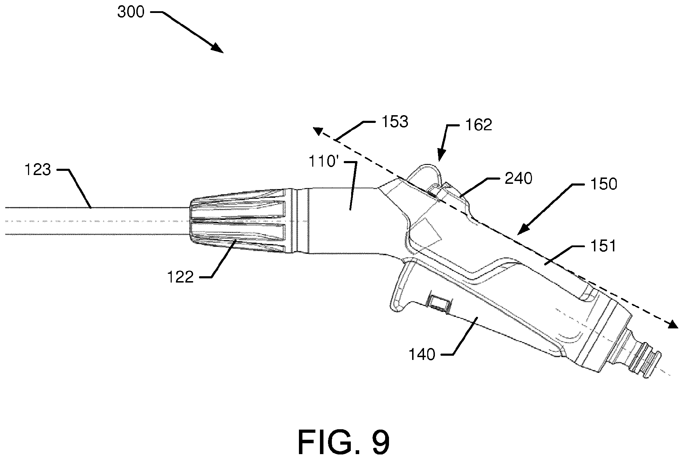

The example embodiment shown in FIGS. 2-8 is not the only structure for a water application device that could employ an example embodiment. In this regard, numerous other structures could also employ example embodiments with different main body shapes. FIG. 9 illustrates one such example of a different device (300) with a different applicator attachment 122 attached to a different main body 110'. The different applicator attachment 122 could simply employ a different nozzle, or in some cases could have a different configuration entirely. For example, the different applicator attachment 122 could be a spray lance attachment having a tubular section 123 that extends forward to the nozzle (not shown). It should be appreciated that the remainder of the device 300 is essentially the same as device 100. For example, the cover assembly 150 may be the same and may include the enclosure portion 240 separating the planar surface 152 from the curved back portion 151. However, the planar surface 152 may be parallel to and lie in the same plane as the longitudinal centerline 153 of the curved back portion 151. The flow control lever 162 may be extended above the height of the enclosure portion 240 to be accessible by the operator's thumb while the operator holds the device 300. The trigger 140 may also be the same as that which was employed in the example of FIGS. 2-7.

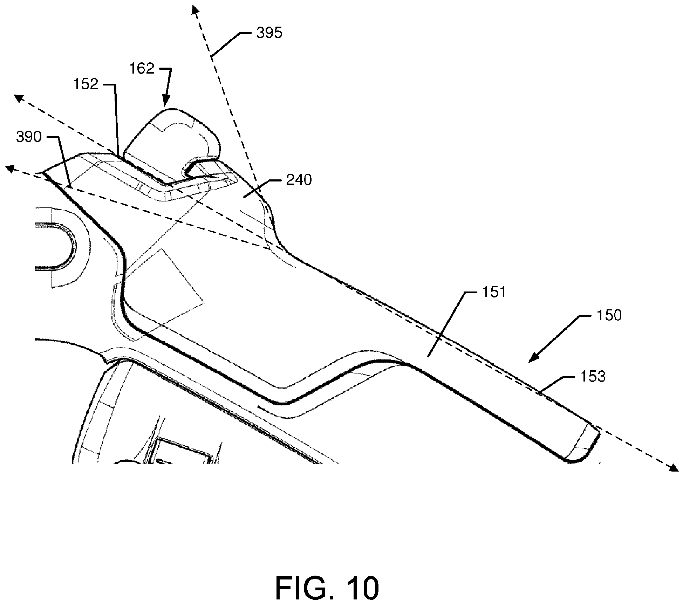

The placement of the planar surface 152 in a position parallel to and in the same plane as the longitudinal centerline 153 of the curved back portion 151 may provide an ergonomic advantage of enabling the operator to manipulate the flow control lever 162 while still holding the device with the same hand. Conventional systems at best provide an offset between the lever and the back of the device so that two hands are needed for manipulation. However, it should be appreciated that the planar surface 152 need not be parallel to or in the same plane as the longitudinal centerline 153 of the curved back portion 151 in all cases to achieve an ergonomic advantage. As shown in FIG. 10, the planar surface 152 could be angled forward to line 390 or backward to line 395. However, when the planar surface 152 joins or intersects the longitudinal centerline 153 of the curved back portion 151 somewhere along the length of the cover assembly 150 (i.e., at the forward end of the curved back portion 151), the thumb can still easily access the flow control lever 162.

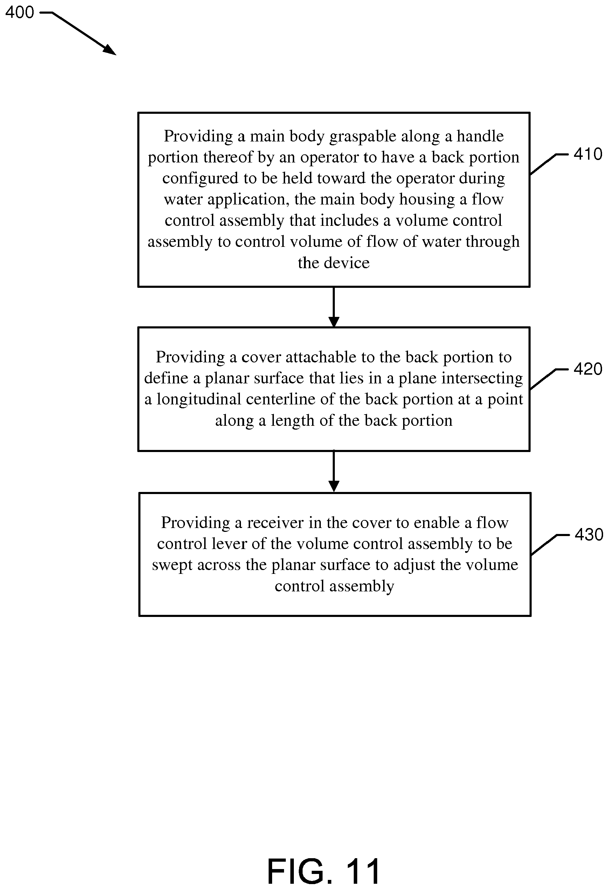

FIG. 11 illustrates a method 400 of providing a water application device having a volume control lever operable by an operator using the same hand that holds the device in accordance with an example embodiment. The method may include providing a main body graspable along a handle portion thereof by an operator to have a back portion configured to be held toward the operator during water application at operation 410. The main body may house a flow control assembly that includes a volume control assembly to control volume of flow of water through the device. The method may further include providing a cover attachable to the back portion to define a planar surface that intersects a plane in which a longitudinal centerline of the back portion lies at a point along a length of the back portion at operation 420 and providing a receiver in the cover to enable a flow control lever of the volume control assembly to be swept across the planar surface to adjust the volume control assembly at operation 430.

In some embodiments, providing the receiver may include forming the receiver from an enclosure portion separating the cover into a curved back portion and the planar surface. In such an example, the planar surface and a longitudinal centerline of the curved back portion may lie in a same plane. Alternatively or additionally, forming the receiver may further include providing raised portions to define lateral limits to the planar surface.

The device employing the features of some embodiments may include additional features that may be optionally added either alone or in combination with each other. In an example embodiment, (3) the back portion comprises a cover attachable to the main body via a snap fitting, welding, adhesive and/or fixing member. In some embodiments, (4) the cover comprises a first raised portion defining a first limit to the range of motion of the flow control lever and a second raised portion defining a second limit to the range of motion of the flow control lever.

In some embodiments, any or all of (1) to (5) may be employed in addition to the optional modifications or augmentations described below. Alternatively or additionally, the tab may be removable from the stem portion. Alternatively or additionally, the stem may be housed inside the cover and the tab may be insertable into the enclosure portion. Alternatively or additionally, the tab and the stem portion are a unitary piece of molded plastic. Alternatively or additionally, the planar surface is not bounded at a distal edge thereof relative to a valve stem axis about which the flow control lever rotates.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A water application device (10/100/300) comprising:
a main body (20/110/110') graspable along a handle portion (22/119) thereof by an operator, the handle portion (22/119) including a back attachment portion (132) configured to be held toward the operator during water application;
a flow control assembly (50) housed in the main body (20/110/110'), the flow control assembly (50) including a volume control assembly (54) to control volume of flow of water through the device (10/100/300);
an operable member (30/140) attachable to a front of the handle portion (22/119) to interface with the flow control assembly (50) to alternately start and stop flow based on a position of the operable member (30/140); and
an applicator head (40/120/122) attachable to an outlet of the main body (20/110/110') to apply water passing through the applicator head (40/120/122) based on an application characteristic of the applicator head (40/120/122),
**characterized in that**
a cover assembly (150) is attached on the back attachment portion (132);
a planar surface (152) is provided on the cover assembly (150) on the back attachment portion (132), the planar surface (152) lies in a plane joining or intersecting a longitudinal centerline (153) of the cover assembly (150) on the back attachment portion (132) at a point along a length of the cover assembly (150) on the back attachment portion (132) and is substantially parallel to a length of the axis (118) of the handle portion (22/119), the planar surface (152) defines at least part of a range of motion of a flow control lever (162) of the volume control assembly (54),
the cover assembly (150) includes a curved back portion (151),
the curved back portion (151) comprises an enclosure portion (240) extending outwardly and away from a back surface of the cover assembly (150), forming a receiver (160) configured to enclose at least a portion of the flow control lever (162) and separating the curved back portion (151) from the planar surface (152),
and wherein the flow control lever (162) comprises a stem portion (164) extending into the volume control assembly (54) and a tab (163) extending along the planar surface (152).

2. The device (10/100/300) of claim 1, wherein the back attachment portion (132) mates with the cover assembly (150) attachable to the main body (20/110/110') via a snap fitting, welding, adhesive and/or fixing member.

3. The device (10/100/300) of claim 1, wherein the cover assembly (150) comprises:
a first raised portion (230) defining a first limit to the range of motion of the flow control lever (162); and
a second raised portion (232) defining a second limit to the range of motion of the flow control lever (162).

4. The device (10/100/300) of claim 1, wherein the tab (163) is removable from the stem portion (164).

5. The device (10/100/300) of claim 1, wherein the stem portion (164) is housed inside the cover assembly (150) and wherein the tab (163) is insertable into the enclosure portion (240).

6. The device (10/100/300) of claim 5, wherein the tab (163) and the stem portion (164) are a unitary piece of molded plastic.

7. The device (10/100/300) of claim 5, wherein the enclosure portion (240) has a height R and the flow control lever (162) extends away from the planar surface (152) by a distance L that is greater than the height R.

8. The device (10/100/300) of any preceding claim, wherein the planar surface (152) is not bounded at a distal edge thereof relative to a valve stem axis (154) about which the flow control lever (164) rotates.

9. A method (400) of providing a water application device (10/100/300) according to any of the preceding claims, the water application device (10/100/300) having a volume control lever operable by an operator using the same hand that holds the device, the method (400) comprising:
providing a main body (20/110/110') graspable along a handle portion (22/119) thereof by an operator to have a back attachment portion (132) configured to be held toward the operator during water application, the main body (20/110/110') housing a flow control assembly (50) that includes a volume control assembly (54) to control volume of flow of water through the device (410);
providing a cover assembly (150) attachable to the back attachment portion (132) to define a planar surface (152) that lies in a plane intersecting a longitudinal centerline (153) of the back attachment portion (132) at a point along a length of the back attachment portion (420)
**characterized in that**
the cover (150, 151) is provided with a planar surface (152) on its back portion (132), joining or intersecting a longitudinal centerline (153) of the cover (150, 151) on the back portion (132) at a point along a length of the cover (150/151) and is substantially parallel to the axis (118), the planar surface (152) defining at least part of a range of motion of a flow control lever (162) of the volume control assembly (54),
forming on the cover (150) a curved back portion (151) comprising an enclosure portion (240) configured to enclose at least a portion of the flow control lever (162) and separating the curved back portion (151) from the planar surface (152), wherein the flow control lever (162) comprises a stem portion (164) extending into the flow control assembly and a tab (163) extending along the planar surface (152); and
providing a receiver in the cover to enable a flow control lever of the volume control assembly to be swept across the planar surface to adjust the volume control assembly (430).

## Patentansprüche

1. Eine Wasserapplikationsvorrichtung (10/100/300), umfassend:
einen Hauptkörper (20/110/110'), der entlang eines Griffabschnitts (22/119) von einem Bediener gegriffen werden kann, wobei der Griffabschnitt (22/119) einen hinteren Befestigungsabschnitt (132) aufweist, der so ausgelegt ist, dass er während der Wasserapplikation in Richtung des Bedieners gehalten wird;
eine Durchflusssteuerungsanordnung (50), die in dem Hauptkörper (20/110/110') angeordnet ist, wobei die Durchflusssteuerungsanordnung (50) eine Volumensteuerungsanordnung (54) umfasst, um das Volumen des Wasserdurchflusses durch die Vorrichtung (10/100/300) zu steuern;
ein betätigbares Element (30/140), das an einer Vorderseite des Griffabschnitts (22/119) befestigbar ist, um mit der Durchflusssteuerungsanordnung (50) eine Schnittstelle zu bilden, um den Durchfluss basierend auf einer Position des betätigbaren Elements (30/140) abwechselnd zu starten und zu stoppen; und
einen Applikatorkopf (40/120/122), der an einem Auslass des Hauptkörpers (20/110/110') befestigbar ist, um Wasser auszubringen, das durch den Applikatorkopf (40/120/122) hindurchgeht, basierend auf einer Applikationscharakteristik des Applikatorkopfes (40/120/122),
**dadurch gekennzeichnet, dass**
eine Abdeckanordnung (150) auf dem hinteren Befestigungsabschnitt (132) angebracht ist;
eine ebene Fläche (152) an der Abdeckanordnung (150) an dem hinteren Befestigungsabschnitt (132) vorgesehen ist, wobei die ebene Fläche (152) in einer Ebene liegt, die eine longitudinale Mittellinie (153) der Abdeckanordnung (150) an dem hinteren Befestigungsabschnitt (132) an einem Punkt entlang einer Länge der Abdeckanordnung (150) an dem hinteren Befestigungsabschnitt (132) verbindet oder schneidet und im Wesentlichen parallel zu einer Länge der Achse (118) des Griffabschnitts (22/119) ist,
die planare Oberfläche (152) zumindest einen Abschnitt eines Bewegungsbereichs eines Durchflusssteuerungshebels (162) der Volumensteuerungsanordnung (54) definiert,
die Abdeckanordnung (150) einen gebogenen hinteren Abschnitt (151) aufweist,
der gebogene hintere Abschnitt (151) einen Gehäuseabschnitt (240) umfasst, der sich nach außen und von einer hinteren Oberfläche der Abdeckanordnung (150) weg erstreckt, eine Aufnahme (160) bildet, die so ausgelegt ist, dass sie mindestens einen Abschnitt des Durchflusssteuerungshebels (162) umschließt und den gebogenen hinteren Abschnitt (151) von der ebenen Oberfläche (152) trennt, und wobei der Durchflusssteuerungshebel (162) einen Schaftabschnitt (164) umfasst, der sich in die Volumensteuerungsanordnung (54) erstreckt, und eine Zunge (163), die sich entlang der ebenen Oberfläche (152) erstreckt.

2. Vorrichtung (10/100/300) nach Anspruch 1, wobei der hintere Befestigungsabschnitt (132) mit der Abdeckanordnung (150) ineinandergreift, die an dem Hauptkörper (20/110/110') über ein Schnapp-, Schweiß-, Klebe- und/oder Befestigungselement befestigbar ist.

3. Vorrichtung (10/100/300) nach Anspruch 1, wobei die Abdeckanordnung (150) umfasst:
einen ersten erhöhten Abschnitt (230), der eine erste Grenze des Bewegungsbereichs des Durchflusssteuerungshebels (162) definiert; und
einen zweiten erhöhten Abschnitt (232), der eine zweite Grenze des Bewegungsbereichs des Durchflusssteuerungshebels (162) definiert.

4. Vorrichtung (10/100/300) nach Anspruch 1, wobei die Lasche (163) vom Schaftabschnitt (164) abnehmbar ist.

5. Vorrichtung (10/100/300) nach Anspruch 1, wobei der Schaftabschnitt (164) innerhalb der Abdeckanordnung (150) angeordnet ist und wobei die Lasche (163) in den Gehäuseabschnitt (240) einführbar ist.

6. Vorrichtung (10/100/300) nach Anspruch 5, wobei die Lasche (163) und der Schaftabschnitt (164) ein einstückiges Teil aus geformtem Kunststoff sind.

7. Vorrichtung (10/100/300) nach Anspruch 5, wobei der Gehäuseabschnitt (240) eine Höhe R aufweist und der Durchflusssteuerungshebel (162) sich von der ebenen Oberfläche (152) um einen Abstand L weg erstreckt, der größer als die Höhe R ist.

8. Vorrichtung (10/100/300) nach einem der vorhergehenden Ansprüche, wobei die ebene Oberfläche (152) nicht an einem distalen Rand davon relativ zu einer Ventilschaftachse (154) begrenzt ist, um die sich der Durchflusssteuerungshebel (164) dreht.

9. Verfahren (400) zum Bereitstellen einer Wasserapplikationsvorrichtung (10/100/300) gemäß einem der vorhergehenden Ansprüche, wobei die Wasserapplikationsvorrichtung (10/100/300) einen Volumensteuerhebel aufweist, der von einem Bediener unter Verwendung derselben Hand, die die Vorrichtung hält, betätigt werden kann, wobei das Verfahren (400) umfasst:
Bereitstellen eines Hauptkörpers (20/110/110'), der entlang eines Griffabschnitts (22/119) von einem Bediener gegriffen werden kann, um einen hinteren Befestigungsabschnitt (132) zu haben, der so ausgelegt ist, dass er während der Wasserapplikation in Richtung des Bedieners gehalten wird;
eine Durchflusssteuerungsanordnung (50), wobei in dem Hauptkörper (20/110/110') eine Durchflusssteuerungsanordnung (50) angeordnet ist, die eine Volumensteuerungsanordnung (54) umfasst, um das Volumen des Wasserdurchflusses durch die Vorrichtung (10/100/300) zu steuern;
Bereitstellen einer Abdeckanordnung (150), die an dem hinteren Befestigungsabschnitt (132) befestigbar ist, um eine ebene Oberfläche (152) zu definieren, die in einer Ebene liegt, die eine longitudinale Mittellinie (153) des hinteren Befestigungsabschnitts (132) an einem Punkt entlang einer Länge des hinteren Befestigungsabschnitts (420) schneidet
**dadurch gekennzeichnet, dass**
die Abdeckung (150, 151) mit einer ebenen Oberfläche (152) an ihrem hinteren Abschnitt (132) versehen ist, die eine longitudinale Mittellinie (153) der Abdeckung (150, 151) an dem hinteren Abschnitt (132) an einem Punkt entlang einer Länge der Abdeckung (150/151) verbindet oder schneidet und im Wesentlichen parallel zu der Achse (118) ist,
die planare Oberfläche (152) zumindest einen Abschnitt eines Bewegungsbereichs eines Durchflusssteuerungshebels (162) der Volumensteuerungsanordnung (54) definiert,
Ausbilden auf der Abdeckung (150) eines gebogenen hinteren Abschnitts (151), der einen Gehäuseabschnitt (240) umfasst, der so ausgelegt ist, dass er mindestens einen Abschnitt des Durchflusssteuerungshebels (162) umschließt und den gebogenen hinteren Abschnitt (151) von der ebenen Oberfläche (152) trennt,
wobei der Durchflusssteuerungshebel (162) einen Schaftabschnitt (164) umfasst, der sich in die Volumensteuerungsanordnung (54) erstreckt, und eine Zunge (163), die sich entlang der ebenen Oberfläche (152) erstreckt; und
Bereitstellen eines Empfängers in der Abdeckung um einen
Durchflusssteuerungshebel der Volumensteueranordnung über die ebene Oberfläche zu führen, um die Volumensteuerungseinheit (430) einzustellen.

## Revendications

1. Dispositif de distribution d'eau (10/100/300) comprenant :
un corps principal (20/110/110') saisissable le long d'une partie poignée (22/119) de celui-ci par un opérateur, la partie poignée (22/119) incluant une partie d'attelage postérieure (132) configurée pour être tenue vers l'opérateur pendant la distribution d'eau ;
un ensemble de contrôle de flux (50) contenu dans le corps principal (20/110/110'), l'ensemble de contrôle de flux (50) incluant un ensemble de régulation du volume (54) pour régler le volume du flux d'eau à travers le dispositif (10/100/300) ;
un élément opérable (30/140) attaché à une partie antérieure de la partie poignée (22/119) pour créer une interface avec l'ensemble de contrôle de flux (50) afin de faire partir et fermer le flux sur la base d'une position de l'élément opérable (30/140) ; et
une tête d'applicateur (40/120/122) attachable à une sortie du corps principal (20/110/110') pour distribuer de l'eau passant à travers la tête d'applicateur (40/120/122) sur la base d'une caractéristique de distribution de la tête d'applicateur (40/120/122),
**caractérisé en ce que**
un ensemble de couvercle (150) est attaché sur la partie d'attelage postérieure (132) ;
une surface plane (152) est fournie sur l'ensemble de couvercle (150) sur la partie d'attelage postérieure (132), la surface plane (152) repose sur un plan se raccordant à ou intersécant une ligne médiane longitudinale (153) de l'ensemble de couvercle (150) sur la partie d'attelage postérieure (132) en correspondance d'un point le long d'une longueur de l'ensemble de couvercle (150) sur la partie d'attelage postérieure (132) et est sensiblement parallèle à une longueur de l'axe (118) de la partie poignée (22/119), la surface plane (152) définit au moins une partie de l'amplitude de mouvement d'un levier de contrôle de flux (162) de l'ensemble de régulation du volume (54),
l'ensemble de couvercle (150) inclut une partie postérieure courbée (151),
la partie postérieure courbée (151) comprend une partie de récipient (240) s'étendant vers l'extérieur et loin d'une surface postérieure de l'ensemble de couvercle (150), en formant un récepteur (160) configuré pour contenir au moins une partie du levier de contrôle de flux (162) et séparant la partie postérieure courbée (151) de la surface plane (152),
et dans lequel le levier de contrôle de flux (162) comprend une partie de tige (164) s'étendant dans l'ensemble de régulation du volume (54) et un volet auxiliaire (163) s'étendant le long de la surface plane (152).

2. Dispositif (10/100/300) selon la revendication 1, dans lequel la partie d'attelage postérieure (132) s'adapte à l'ensemble de couvercle (150) attachable au corps principal (20/110/110') au moyen d'un raccordement par encliquetage, d'un soudage, d'un élément adhésif et/ou de fixation.

3. Dispositif (10/100/300) selon la revendication 1, dans lequel l'ensemble de couvercle (150) comprend :
une première partie relevée (230) définissant une première limite à l'amplitude de mouvement du levier de contrôle de flux (162) ; et
une deuxième partie relevée (232) définissant une deuxième limite à l'amplitude de mouvement du levier de contrôle de flux (162).

4. Dispositif (10/100/300) selon la revendication 1, dans lequel le volet auxiliaire (163) est amovible de la partie de tige (164).

5. Dispositif (10/100/300) selon la revendication 1, dans lequel la partie de tige (164) est contenue à l'intérieur de l'ensemble de couvercle (150) et dans lequel le volet auxiliaire (163) est insérable dans la partie de récipient (240).

6. Dispositif (10/100/300) selon la revendication 5, dans lequel le volet auxiliaire (163) et la partie de tige (164) sont une pièce unitaire en plastique moulé.

7. Dispositif (10/100/300) selon la revendication 5, dans lequel la partie de récipient (240) a une hauteur R et le levier de contrôle de flux (162) s'étend loin de la surface plane (152) à une distance L qui est supérieure à la hauteur R.

8. Dispositif (10/100/300) selon l'une quelconque des revendications précédentes, dans lequel la surface plane (152) n'est pas limitée en correspondance de son bord distal par rapport à un axe de tige de vanne (154) autour duquel la partie de tige (164) pivote.

9. Procédé (400) de fourniture d'un dispositif de distribution d'eau (10/100/300) selon l'une quelconque des revendications précédentes, le dispositif de distribution d'eau (10/100/300) ayant un levier de régulation du volume opérable par un opérateur en utilisant la même main qui tient le dispositif, le procédé (400) consistant à :
fournir un corps principal (20/110/110') saisissable le long d'une partie poignée (22/119) de celui-ci par un opérateur pour avoir une partie d'attelage postérieure (132) configurée pour être tenue vers l'opérateur pendant la distribution d'eau, le corps principal (20/110/110') contenant un ensemble de contrôle de flux (50) qui inclut un ensemble de régulation du volume (54) pour régler le volume du flux d'eau à travers le dispositif (410) ;
fournir un ensemble de couvercle (150) attachable à la partie d'attelage postérieure (132) afin de définir une surface plane (152) qui repose sur une surface intersécant une ligne médiane longitudinale (153) de la partie d'attelage postérieure (132) en correspondance d'un point le long d'une longueur de la partie d'attelage postérieure (420)
**caractérisé en ce que**
le couvercle (150, 151) est muni d'une surface plane (152) sur sa partie postérieure (132), se raccordant à ou intersécant une ligne médiane longitudinale (153) du couvercle (150, 151) sur la partie postérieure (132) en correspondance d'un point le long d'une longueur du couvercle (150/151) et est sensiblement parallèle à l'axe (118), la surface plane (152) définissant au moins une partie d'une amplitude de mouvement d'un levier de contrôle de flux (162) de l'ensemble de régulation du volume (54),
en formant sur le couvercle (150) une partie postérieure courbée (151) comprenant une partie de récipient (240) configurée pour contenir au moins une partie du levier de contrôle de flux (162) et séparant la partie postérieure courbée (151) de la surface plane (152), dans lequel le levier de contrôle de flux (162) comprend une partie de tige (164) s'étendant dans l'ensemble de contrôle de flux et un volet auxiliaire (163) s'étendant le long de la surface plane (152) ; et
fournir un récepteur dans le couvercle pour permettre à un levier de contrôle de flux de l'ensemble de régulation du volume d'être balayer à travers la surface plane pour régler l'ensemble de régulation du volume (430).
